# FASCICULE DE BREVET EUROPEEN

(11) **EP 0 611 690 B1**
(45) Date de publication et mention de la délivrance du brevet: **02.05.1997**
(21) Numéro de dépôt: 94400169.2
(22) Date de dépôt: 26.01.1994
(51) Int. Cl.: B62D 1/18

(54) **Ensemble de colonne de direction escamotable en cas de choc**
Bei Stoss einfahrbare Lenksäuleneinrichtung
Steering column unit which is retractable in case of shock

(30) Priorité: 17.02.1993 FR 9301796
(43) Date de publication de la demande: 24.08.1994
(73) Titulaire: AUTOMOBILES PEUGEOT, 75116 Paris (FR); AUTOMOBILES CITROEN, 92200 Neuilly-sur-Seine (FR)
(72) Inventeur: Clement, Daniel, F-78170 La Celle St Cloud (FR)
(74) Mandataire: Polus, Camille

(56) Documents cités:
- EP-A- 0 289 133
- DE-A- 3 723 376
- DE-A- 4 030 841
- US-A- 4 970 910

## Description

La présente invention concerne un ensemble de colonne de direction, notamment pour véhicule automobile, escamotable ou rétractable en cas de choc ou de collision.

L'invention concerne un ensemble de colonne de direction du type comportant un arbre de direction monté à rotation dans un corps de colonne en deux parties qui sont montées télescopiques l'une dans l'autre et un dispositif de blocage en position relative réglée des deux parties du corps de colonne de direction.

En effet, afin de protéger le conducteur en cas de choc ou de collision, il est souhaitable que l'ensemble de colonne de direction possède une capacité de rétraction, c'est-à-dire permettant au volant de se déplacer vers l'avant par rapport au conducteur, de façon à augmenter la distance entre le volant et le corps du conducteur, et en particulier entre le volant et la tête de celui-ci.

Dans ce but, il a déjà été proposé différentes conceptions d'un ensemble de colonne de direction visant à obtenir le coulissement de l'un des tubes constituant la colonne de direction dans l'autre tube, soit en tirant sur un tube, par exemple au moyen de câbles, soit en le poussant par un procédé mécanique, pneumatique, etc. Ces conceptions nécessitent une réalisation spécifique de la colonne de direction et ne peuvent donc pas être adaptées aisément sur des véhicules, en particulier sur des véhicules existants.

Par ailleurs, et afin d'accroître le confort d'utilisation du véhicule, certaines colonnes de direction télescopiques comportent un dispositif de réglage de leur longueur de manière à adapter la position du volant en fonction de la morphologie du conducteur. Ce réglage par déplacement relatif télescopique entre les tubes de la colonne de direction est par exemple assuré par un dispositif de serrage manoeuvré par un levier.

Il a paru avantageux d'utiliser un dispositif de blocage de ce type, aisément adaptable sur les colonnes de direction qui en sont actuellement dépourvues, pour assurer la rétraction de la colonne en cas de choc.

De ce fait, il est également possible de combiner les deux effets, c'est-à-dire d'obtenir une colonne de direction réglable en position longitudinale et rétractable en cas de choc au moyen du même mécanisme de blocage, ce qui limite le nombre des pièces nécessaires et donc l'encombrement et le coût du dispositif.

DE-A-3 723 376 décrit un ensemble de colonne de direction comportant un dispositif de blocage déverrouillable en cas de choc par un mécanisme à inertie, mais ne comportant pas de moyens de réglage de position.

La présente invention propose donc un ensemble de colonne de direction du type mentionné en introduction, caractérisé en ce que le dispositif de blocage est susceptible d'être libéré en cas de choc du véhicule pour permettre l'effacement vers l'avant du volant, ledit dispositif de blocage comportant un organe de commande relié à un mécanisme à inertie qui, en cas de choc, agit sur l'organe de commande pour provoquer la libération du dispositif de blocage.

Selon d'autres caractéristiques de l'invention:
- la mécanisme à inertie comporte une masse d'inertie sensible à la décélération du véhicule qui est reliée mécaniquement à l'organe de commande du dispositif de blocage ;
- l'organe de commande est un levier de commande monté pivotant autour d'un axe sensiblement perpendiculaire à la direction longitudinale d'avancement du véhicule et dont un point éloigné de son axe de pivotement est relié à la masse d'inertie ;
- la masse d'inertie est fixée à l'extrémité libre du levier de commande ;

Selon une variante de réalisation, l'organe de commande est un organe de blocage manoeuvrable manuellement pour le réglage de la position longitudinale du volant ;
- le dispositif de blocage comporte par exemple une structure de support de la colonne, reliée au reste de la structure du véhicule et comportant deux flasques entre lesquels est disposé le corps de colonne de direction, et des moyens de verrouillage en position réglée des deux parties du corps de colonne de direction par rapprochement des flasques, comprenant un tirant s'étendant entre les flasques dont une première extrémité comporte des moyens d'appui sur l'un des flasques et dont une seconde extrémité est reliée à des éléments de verrouillage comprenant un organe de butée, à la seconde extrémité du tirant, un organe d'appui intermédiaire en contact avec l'autre flasque de la structure de support et déplaçable axialement sur le tirant et des moyens d'écartement disposés entre l'organe de butée et l'organe d'appui intermédiaire et déplaçables entre une position active de verrouillage et une position escamotée de libération sous l'action de l'organe de commande.

D'autres caractéristiques et avantages de l'invention apparaîtront à la lecture de la description détaillée qui va suivre pour la compréhension de laquelle on se reportera aux dessins annexés dans lesquels :
- La figure 1 est une vue latérale en élévation d'un ensemble de colonne de direction réalisé conformément aux enseignements de l'invention;
- la figure 2 est une vue en section partielle selon la ligne 2-2 de la figure 1 ; et
- la figure 3 est une vue à plus grande échelle en section selon la ligne 3-3 de la figure 2.

L'ensemble de colonne de direction 10 illustré sur les figures comporte un corps de colonne de direction 12 comportant deux tubes ou fourreaux télescopiques 13 et 14 susceptibles de coulisser l'un par rapport à l'autre et dans lesquels est monté à rotation un arbre de direction 16 en deux parties 18 et 22.

La première partie 18 de l'arbre 16 comporte à son extrémité 20 des moyens pour le montage d'un volant de direction (non représenté) tandis que l'extrémité 24 de la seconde partie 22 de l'arbre de direction 16 comporte des moyens 26 pour sa liaison au reste du mécanisme de direction du véhicule (non représenté).

Les deux parties 18 et 22 sont également liées en rotation par des cannelures (non représentées).

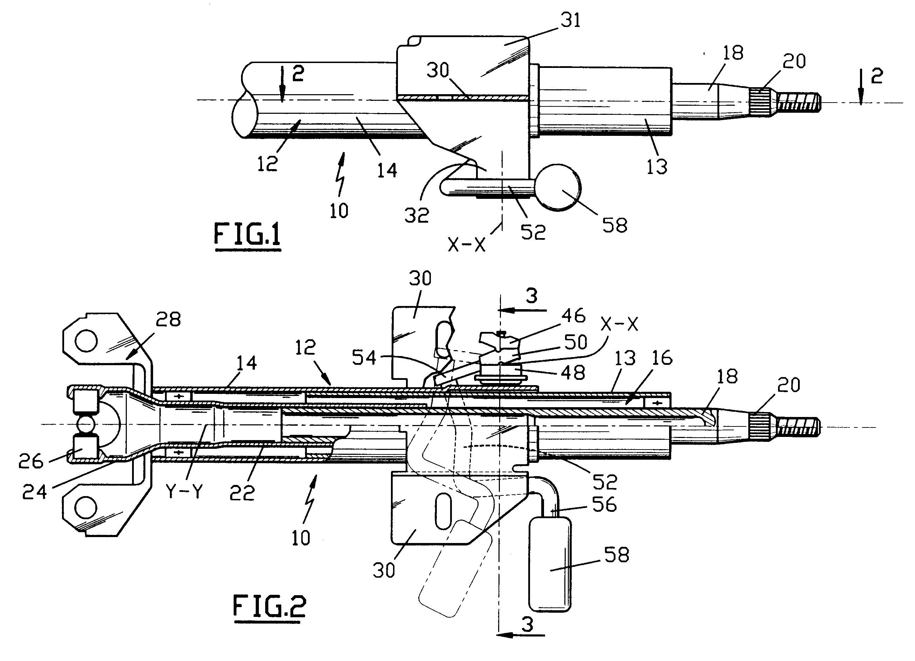

Le fourreau 14 porte à son extrémité avant, c'est-à-dire à gauche en considérant les figures 1 et 2, une bride de fixation 28 permettant son montage sur la structure de la caisse du véhicule.

Le corps de colonne 12 est également supporté par des brides latérales 30 qui sont soudées sur un support de colonne 31 qui est une pièce présentant une section générale en forme de U dont les branches 32 constituent deux flasques déformables élastiquement entre lesquels est reçu le fourreau tubulaire 13. A l'intérieur du support 31 est également agencée une pièce de serrage 34 qui comporte deux patins de serrage 36 immobilisés en translation longitudinale par rapport au support 31 et aux brides 30 et qui sont susceptibles de coopérer avec la surface cylindrique extérieure du fourreau 13 pour immobiliser ce dernier en translation longitudinale par rapport au fourreau 14 et par rapport à la structure de la caisse du véhicule.

Le serrage est assuré par rapprochement mutuel des flasques 32 au moyen d'un mécanisme de serrage comportant un tirant 38 qui traverse les flasques 32 et dont une première extrémité 40 est équipée d'un patin d'appui 42 qui prend appui à l'extérieur sur l'un des flasques 32.

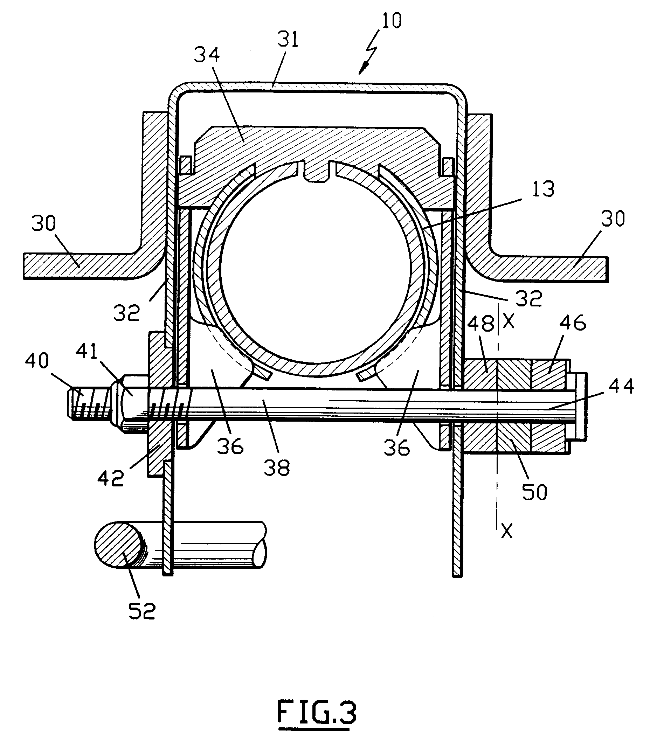

L'autre extrémité 44 du tirant 38 comporte un organe de butée 46 et un patin 48 qui prend appui contre l'autre flasque 32, qui sont montés mobiles longitudinalement sur le tirant 38 et entre lesquels est disposé un organe d'écartement 50 qui, selon un agencement connu, peut basculer autour d'un axe X-X, illustré aux figures 1, 2 et 3 qui est sensiblement perpendiculaire à l'axe longitudinal Y-Y de la colonne de direction et à la direction d'avancement du véhicule.

L'organe d'écartement 50, qui est illustré en position de blocage sur les figures, est relié à un levier de commande de blocage 52 dont une extrémité 54 est fixée à l'élément intermédiaire d'écartement 50 de manière à permettre le basculement du levier de commande autour de l'axe X-X.

L'autre extrémité 56 du levier de commande 52 est équipée d'une masse d'inertie 58.

Conformément aux enseignements de l'invention, la masse d'inertie 58 permet d'effectuer un déverrouillage, ou libération, automatique du dispositif de blocage en cas de choc ou de collision du véhicule lorsque, sous l'effet de la décélération que subit ce dernier, la masse d'inertie 58 est entraînée en mouvement vers l'avant, c'est-à-dire de la droite vers la gauche en considérant les figures 1 et 2 et provoque alors automatiquement le basculement du levier de commande 52 autour de l'axe X-X vers sa position de libération illustrée en traits mixtes à la figure 2, le volant de direction étant ainsi libre de s'escamoter vers l'avant.

La longueur et la position du levier 52 sont déterminées d'une part de manière que le conducteur puisse libérer le dispositif de blocage au moyen d'un effort normal exercé sur la poignée constituée par la masse d'inertie 58, la valeur de cet effort pouvant être réglée par serrage de l'écrou 41 sur l'extrémité 40 du tirant 38.

Le poids de la masse d'inertie 58 peut être déterminé précisément de manière à provoquer la libération automatique du dispositif de blocage à un instant déterminé après l'impact, cet instant étant en particulier fonction de la courbe moyenne de décélération du véhicule et de la trajectoire des occupants tel que cela ressort des essais de choc effectués par les constructeurs des véhicules automobiles.

Le mécanisme de blocage des deux éléments télescopiques de la colonne que l'on vient de décrire est d'un type couramment utilisé pour assurer son verrouillage en position, afin de déterminer la position du volant à l'intérieur de l'habitacle, et sa libération en vue d'effectuer un réglage de cette position. Dans ce cas, le levier de commande 52 est manoeuvré par le conducteur et il est situé de façon à lui être accessible.

Le mécanisme que l'on vient de décrire permet donc aisément d'assurer les deux fonctions, il suffit d'ajouter un dispositif (pion, goupille...), indépendant du système de blocage et apte à s'effacer en cas de choc, destiné à limiter la course de réglage du volant afin de conserver une longueur de course suffisante pour permettre la rétraction de la colonne en cas de choc.

Le dispositif de blocage qui a été illustré et décrit en référence aux figures est du type à serrage d'un tube mais l'invention n'est pas limitée à cette conception du dispositif de blocage.

La masse d'inertie 58 a été illustrée comme fixée directement à l'extrémité 56 du levier de commande 52 mais elle pourrait, à titre de variante, être par exemple constituée par une masselotte circulant dans un tube et reliée au levier par un câble visant à tirer sur celui-ci dans le sens de la libération du dispositif.

A titre de variante, il est également possible de concevoir un agencement dans lequel un mécanisme à inertie transmet un ordre de libération d'un organe de commande, par exemple du type électromagnétique qui, en usage normal, immobilise longitudinalement deux composants du corps de colonne de direction.

## Revendications

1. Ensemble de colonne de direction (10) réglable en position, notamment pour véhicule automobile, du type comportant un arbre de direction (16) monté à rotation dans un corps de colonne (12) en deux parties (13,14) qui sont montées télescopiques l'une dans l'autre et un dispositif (46-58) de blocage en position relative des deux parties (13,14) du corps (12) de colonne de direction, caractérisé en ce que le dispositif de blocage (46-58) est susceptible d'être libéré en cas de choc du véhicule pour permettre l'effacement vers l'avant du volant, ledit dispositif de blocage comportant un organe de commande (52) relié à un mécanisme à inertie (58) qui, en cas de choc, agit sur l'organe de commande (52) pour provoquer la libération du dispositif de blocage.

2. Ensemble de colonne de direction selon la revendication 1, caractérisé en ce que le mécanisme à inertie comporte une masse d' inertie (58) sensible à la décélération du véhicule qui est reliée mécaniquement à l'organe de commande (52) du dispositif de blocage.

3. Ensemble de colonne de direction selon la revendication 2, caractérisé en ce que l'organe de commande (52) est un levier de commande monté basculant autour d'un axe (X-X) sensiblement perpendiculaire à la direction longitudinale d'avancement du véhicule et dont un point (56) éloigné de son axe de basculement (X-X) est relié à la masse d' inertie (58).

4. Ensemble de colonne de direction selon la revendication 3, caractérisé en ce que la masse d'inertie (58) est fixée à l'extrémité libre (56) du levier de commande (52).

5. Ensemble de colonne de direction selon la revendication 4, caractérisé en ce que l'organe de commande (52) est un organe de blocage manoeuvrable manuellement pour le réglage de la position longitudinale du volant.

6. Ensemble de colonne de direction selon l'une quelconque des revendications précédentes, caractérisé en ce que le dispositif de blocage comporte une structure (30) de support de la colonne de direction, reliée au reste de la structure du véhicule et comportant deux flasques (32) entre lesquels est disposé le corps de colonne (13, 14) et des moyens de verrouillage en position réglée des deux parties (13, 14) du corps de colonne de direction par rapprochement des flasques, comprenant un tirant (38) s'étendant entre les flasques (32), dont une première extrémité (40) comporte des moyens (42) d'appui sur l'un des flasques et dont une seconde extrémité (44) est reliée à des éléments de verrouillage comprenant un organe de butée (46), à la seconde extrémité du tirant, un organe d'appui intermédiaire (48) en contact avec l'autre flasque (32) de la structure de support (31) et déplaçable axialement sur le tirant (38) et des moyens d'écartement (50) disposés entre l'organe de butée (46) et l'organe d'appui intermédiaire (48) et déplaçables entre une position active de verrouillage et une position escamotée de libération.

## Claims

1. Steering column unit (10) having an adjustable position, in particular for a motor vehicle, of the type comprising a steering shaft (16) mounted to rotate in a column body (12) in two parts (13, 14) which are mounted telescopically one in the other and a device (46-58) for locking in a relative position the two parts (13, 14) of the steering column body (12), characterised in that the locking device (46-58) is able to be released in the case of impact on the vehicle in order to allow the forwards retraction of the steering wheel, said locking device comprising a control member (52) connected to an inertia mechanism (58) which, in the case of impact, acts on the control member (52) to cause the release of the locking device.

2. Steering column bit according to Claim 1, characterised in that the inertia mechanism comprises an inertia weight (58) sensitive to the deceleration of the vehicle which is connected mechanically to the control member (52) of the locking device.

3. Steering column unit according to Claim 2, characterised in that the control member (52) is a control lever mounted to tilt about an axis (X-X) substantially perpendicular to the longitudinal direction of forwards movement of the vehicle and whereof a point (56) remote from its tilting axis (X-X) is connected to the inertia weight (58).

4. Steering column unit according to Claim 3, characterised in that the inertia weight (58) is fixed to the free end (56) of the control lever (52).

5. Steering column unit according to Claim 4, characterised in that the control member (52) is a locking member able to be operated manually for adjusting the longitudinal position of the steering wheel.

6. Steering column unit according to one of the preceding Claims, characterised in that the locking device has a structure (30) for supporting the steering column, connected to the remainder of the structure of the vehicle and comprising two cheeks between which the column body (13, 14) is disposed and means for locking in an adjusted position, the two parts (13, 14) of the steering column body by moving the cheeks closer together, comprising a tie-rod (38) extending between the cheeks (32), a first end (40) of which comprisies means (42) for resting on one of the cheeks and a second end (44) of which is connected to locking members comprising a atop member (46) at the second end of the tie-rod, an intermediate support member (48) in contact with the other cheek (32) of the support structure (31) and able to move axially on the tie-rod (38) disposed between the stop member (46) and the intermediate support member (48) and able to move between an active locking position and a retracted release position.

## Patentansprüche

1. Lenksäulenbaueinheit (10) mit einstellbarer Position, insbesondere für Kraftfahrzeuge, des Typs mit einer Lenkwelle (16), die in einem Säulenkörper (12) aus zwei Teilen (13, 14), die relativ zueinander teleskopartig angebracht sind, drehbar angebracht ist, und einer Vorrichtung (46-58) für die Blockierung der relativen Position der zwei Teile (13, 14) des Lenksäulenkörpers (12), dadurch gekennzeichnet, daß die Blockiervorrichtung (46-58) im Fall eines Aufpralls des Fahrzeugs freigegeben werden kann, um das Ausweichen des Lenkrades nach vorn zu ermöglichen, wobei die Blockiervorrichtung ein Steuerelement (52) enthält, das mit einem Trägheitsmechanismus (58) verbunden ist, der im Fall eines Aufpralls auf das Steuerelement (52) einwirkt, um die Freigabe der Blockiervorrichtung hervorzurufen.

2. Lenksäulenbaueinheit nach Anspruch 1, dadurch gekennzeichnet, daß der Trägheitsmechanismus eine Trägheitsmasse (58) aufweist, die auf die Verzögerung des Fahrzeugs anspricht und mit dem Steuerelement (52) der Blockiervorrichtung mechanisch verbunden ist.

3. Lenksäulenbaueinheit nach Anspruch 2, dadurch gekennzeichnet, daß das Steuerelement (52) ein Steuerhebel ist, der schwenkbar um eine Achse (X-X) angebracht ist, die zur Längsrichtung der Vorwärtsbewegung des Fahrzeugs im wesentlichen senkrecht ist, und wovon ein Punkt (56), der von der Schwenkachse (X-X) entfernt ist, mit der Trägheitsmasse (58) verbunden ist.

4. Lenksäulenbaueinheit nach Anspruch 3, dadurch gekennzeichnet, daß die Trägheitsmasse (58) am freien Ende (56) des Steuerhebels (52) befestigt ist.

5. Lenksäulenbaueinheit nach Anspruch 4, dadurch gekennzeichnet, daß das Steuerelement (52) ein manuell betätigbares Blockierelement für die Einstellung der longitudinalen Position des Lenkrades ist.

6. Lenksäulenbaueinheit nach irgendeinem der vorangehenden Ansprüche, dadurch gekennzeichnet, daß die Blockiervorrichtung eine Lenksäulen-Unterstützungsstruktur (30), die mit der übrigen Struktur des Fahrzeugs verbunden ist und versehen ist mit zwei Flanschen (32), zwischen denen der Säulenkörper (13, 14) angeordnet ist, und mit Mitteln für die Verriegelung der zwei Teile (13, 14) des Lenksäulenkörpers in der eingestellten Position durch Annähern der Flansche, sowie eine Spannstange (38) enthält, die sich zwischen den Flanschen (32) erstreckt und wovon ein erstes Ende (40) Mittel (42) zum Abstützen an einem der Flansche aufweist und wovon ein zweites Ende (44) mit Verriegelungselementen verbunden ist, die ein Anschlagelement (46) für den Anschlag am zweiten Ende der Spannstange, ein Zwischenabstützelement (48), das mit dem anderen Flansch (32) der Unterstützungsstruktur (31) in Kontakt ist und an der Spannstange (38) axial verschiebbar ist, sowie Abstandsmittel (50) aufweisen, die zwischen dem Anschlagelement (46) und dem Zwischenabstützelement (48) angeordnet sind und zwischen einer aktiven Verriegelungsposition und einer eingezogenen Freigabeposition verschiebbar sind.
